# EUROPEAN PATENT APPLICATION

(11) **EP 1 892 649 A2**
(43) Date of publication of application: **27.02.2008**
(21) Application number: 07007724.3
(22) Date of filing: 16.04.2007
(51) Int. Cl.: G06K 19/067, A01K 11/00

(54) **Bio implant RFID tag and insertion tool thereof**

(30) Priority: 21.08.2006 JP 2006224476
(71) Applicant: Hitachi, Ltd., Chiyoda-ku Tokyo 100-8220 (JP)
(72) Inventor: Saito, Takeshi, Chiyoda-ku Tokyo 100-8220 (JP); Ashizawa, Minoru, Chiyoda-ku Tokyo 100-8220 (JP); Sakama, Isao, Chiyoda-ku Tokyo 100-8220 (JP)
(74) Representative: Strehl Schübel-Hopf & Partner

(57) **Abstract**

A 6 mm long and 1.5 wide antenna (3) is evaporated on a surface of a 7 mm long and 2.4 mm wide inlet film (1), and a slit (4) is formed in the antenna.
An IC chip (5) is mounted on the antenna over the slit like a bridge to configure an inlet. The inlet is wound on a 7 mm long shaft (6) having a diameter of 0.8 mm in its longitudinal direction. The shaft with the inlet wound thereon is inserted in an inside of an 11 mm long outer coating cover (8) having a diameter of 1 mm, the cover being made of resin. The cover with the shaft and the inlet therein is passed through a heater cylinder for fusion by heat, thereby providing the coating to the RFID tag. This results in a small bioimplant RFID tag.

## Description

### BACKGROUND OF THE INVENTION

The present invention relates to a Radio Frequency IDentification (RFID) tag and the like for wirelessly transmitting information recorded in an Integrated Circuit (IC) chip, and in particular, to a bioimplant RFID tag and an insertion tool of the same which is implanted in a living body of an animal, for example, to conduct information management for the animal.

Recently, RFID tags have been broadly employed to conduct information management for animals such as pets, domestic animals, and laboratory animals. Such RFID tag includes an IC chip and a small-sized antenna and is capable of transmitting information such as an IDentification recorded in the IC chip from the antenna. Therefore, by contactlessly reading by a tag reader the information recorded in the IC chip, it is possible to manage the animal. In use, the RFID tag is implanted in a living body of animals and is hence called, for example, bioimplant RFID tag and is used for animals widely ranging from large animals such as cattle and horses to middle animals such as sheep, penguins, dogs, and cats. A bioimplant RFID tag of a size, for example, having a length of about 12 millimeters (mm) and a diameter of about 1.6 mm is hypodermically implanted in middle animals such as dogs and cats to conduct information management for the animals (reference is to be made to, for example, "Terry Watkins 'Is the biochip the Mark of the Beast?' [online]. Dial-the-Truth Ministries, 1999. [retrieved on 2006-08-08]". (Retrieved from the Internet)

When the RFID tag of the size, i.e., having a length of about 12 mm long and a diameter of about 1.6 mm is implanted in a living body of a middle animal, e.g., a rat having a body length of at least 20 centimeters (cm), since the length of the RFID tag is equal to or less than six percent of the length of the rat, the rat does not receive stress and can live continuously. In general, when a foreign substance such as an RFID tag is hypodermically implanted in an animal, it is generally considered that the animal can continuously live without receiving stress if the length of the tag is equal to or less than ten percent of the body length of the animal and the diameter of the tag is equal to or less than 1.5 percent of the body length thereof.

### SUMMARY OF THE INVENTION

However, when an RFID tag having a length of about 12 mm and a diameter of about 1.6 mm is implanted in a living body of a small animal having a body length equal to or less than 10 cm, the length of the tag is about twelve percent of the body length of the small animal, and hence the animal receives stress and cannot live continuously. For example, when the RFID tag of the above size is implanted in a small animal such as a mouse used for experiments, the mouse cannot continuously live due to strong stress. That is, the grownup mouse has a body length of about 7 cm to about 8 cm and a tail length of about 7 cm. The length of about 12 mm of the RFID tag is at least 17% of the body length of the mouse and the diameter of about 1.6 mm of the tag is at least 2.2% of that of the mouse. Therefore, it can be expected that the mouse receives too much stress to continuously live.

The RFID tag includes a computer microchip, an antenna coil including a core of ferrite or iron and copper wire wound thereon, a capacitor, and a glass capsule, leading to problems. For example, it is difficult to reduce the size and weight of the tag. Also, the tag is not flexible and hence when the tag is implanted in a small animal, it exerts stress onto the small animal to remarkably reduces life of the animal.

It is therefore an object of the present invention, which has been devised to solve the problems, to provide a bioimplant RFID tag in which even when the tag is hypodermically implanted in a small animal such as a mouse, the tag does not exert stress onto the mouse and the tag can secure a predetermined communication distance, and an insertion tool for the bioimplant RFID tag to insert the bioimplant RFID tag in a living body of an animal.

To achieve the object, there is provided according to the present invention a bioimplant RFID tag to be implanted in a living body of an animal to conduct information management for the animal through wireless communication including an inlet including a film of resin of flexible material, an antenna in which an impedance matching slit is formed, and an IC chip, the antenna and the IC chip being disposed on the film; a rod member 6 made of resin of flexible material for pasting the inlet on an outer circumference thereof, and an outer coating cover made of resin of material having bio-affinity for coating therewith the inlet pasted on the outer circumference of the rod member. Thanks to the configuration, the RFID tag is flexible and has bio-affinity. Therefore, when the tag is implanted in an animal, the tag does not exert stress onto the animal. Moreover, the tag has sufficient communicability.

Additionally, the bioimplant RFID tag is implementable also by use of a printed circuit board. According to the present invention, there is provided a bioimplant RFID tag to be implanted in a living body of an animal to conduct information management for the animal through wireless communication, including a U-shaped printed circuit board. The circuit board includes a substrate section including an antenna in which an impedance matching slit is formed, an IC chip, and a needle-shaped section formed to include a sharp end in a tip end region of the substrate section, the antenna and the IC chip being mounted on the substrate section and a grip section for holding the substrate section. Moreover, a groove is formed in a bottom region of the substrate section, to easily cut off the substrate section. Incidentally, an inner edge of the grip section and an inner edge of the substrate section restrict an implantation depth with which the substrate section (i.e., the bioimplant RFID tag) is implanted in the living body of the animal.

Additionally, according to the present invention, there is provided an insertion tool for implanting a bioimplant RFID tag for conducting information management for an animal through wireless communication in a living body of the animal, including a piece of suture with a needle, the suture with a needle being integrally coupled with the RFID tag.

According to the present invention, there is provided a bioimplant RFID tag and an insertion tool thereof in which even when the tag is implanted in a small animal such as a mouse, the tag does not exert stress onto the mouse and the tag has sufficient communicability.

Other objects, features and advantages of the invention will become apparent from the following description of the embodiments of the invention taken in conjunction with the accompanying drawings.

### BRIEF DESCRIPTION OF THE DRAWINGS

FIG. 1 is a plan view showing an inlet applied to a first embodiment of a bioimplant RFID tag according to the present invention.
FIG. 2 is a perspective view of a round bar on which the inlet shown in FIG. 1 is pasted.
FIG. 3 is a perspective view showing an RFID tag bar in a state in which the inlet shown in FIG. 1 is pasted on the round bar shown in FIG. 2.
FIG. 4A is a cross-sectional view showing a cross section along line A-A of the RFID tag bar shown in FIG. 3.
FIG. 4B is a cross-sectional view showing another cross section along line A-A of the RFID tag bar shown in FIG. 3.
FIG. 5A is a perspective view of the first embodiment the bioimplant RFID tag cut off after an outer coating is applied to the RFID tag bar shown in FIG. 3.
FIG. 5B is a cross-sectional view of a cross section along line B-B of FIG. 5A of the first embodiment the bioimplant RFID tag cut off after an outer coating is applied to the RFID tag bar shown in FIG. 3.
FIGS. 6A to 6C are structural diagrams for explaining a production process of a second embodiment of a bioimplant RFID tag according to the present invention.
FIG. 7A is a perspective view of the second embodiment of a bioimplant RFID tag according to the present invention.
FIG. 7B is a cross-sectional view of a cross section along line C-C of FIG. 7A of the second embodiment of a bioimplant RFID tag according to the present invention.
FIG. 8A is a perspective view of an hollow shaft applied to a third embodiment according to the present invention.
FIG. 8B is a cross-sectional view of a cross section showing a bioimplant RFID tag in which the hollow shat as the RFID tag bar is inserted in an outer coating cover.
FIG. 9A is a cross-sectional view of a cross section showing a bioimplant RFID tag applied to another mode of the third embodiment according to the present invention.
FIG. 9B is a cross-sectional view of a cross section showing a bioimplant RFID tag applied to another mode of the third embodiment according to the present invention in which the tag of FIG. 9A is deformed.
FIG. 10 is a conceptual diagram of packaging of a bioimplant RFID tag and an insertion tool thereof according to the fourth embodiment of the present invention.
FIG. 11 is a conceptual diagram of packaging of a bioimplant RFID tag and an insertion tool thereof in another mode of the fourth embodiment according to the present invention.
FIG. 12 is a diagram generally showing structure of skin of an animal.
FIG. 13 is a conceptual diagram showing a first joining method of joining suture with a bioimplant RFID tag according to the fifth embodiment of the present invention.
FIG. 14 is a conceptual diagram showing a second joining method of joining suture with a bioimplant RFID tag according to the fifth embodiment of the present invention.
FIG. 15 is a conceptual diagram showing a third joining method of joining suture with a bioimplant RFID tag according to the fifth embodiment of the present invention.
FIG. 16 is a conceptual diagram showing a joined state of suture with a needle with a bioimplant RFID tag according to the fifth embodiment of the present invention.
FIG. 17A is a side view of a printed circuit board applied to a bioimplant RFID tag according to the sixth embodiment of the present invention.
FIG. 17B is a plan view of a printed circuit board applied to a bioimplant RFID tag according to the sixth embodiment of the present invention.

### DESCRIPTION OF THE EMBODIMENTS

Next, referring to the drawings, description will be given of embodiments of the present invention using favorable examples of a bioimplant RFID tag according to the present invention. For easy understanding, description will be first given of an overview of a bioimplant RFID tag according to the present invention.

The present invention provides a quite small bioimplant RFID tag capable of being hypodermically implanted in a small animal such as a mouse. That is, the grownup mouse has a body length of about 7 cm to about 8 cm and a tail length of about 7 cm. In this situation, the size of the bioimplant RFID tag with which the animal can continuously live without receiving stress even after the tag is hypodermically implanted in the mouse is as follows. Since the length of the tag is equal to or less than 10% of the body length of the animal and the diameter of the tag is equal to or less than 1.5% of the body length thereof, it is required that the tag has a diameter of 1 mm or less and a length of 7 mm or less.

The bioimplant RFID tag having a diameter of 1 mm and a length of 7 mm includes a very small antenna having a length of 6 mm and a width of 1.5 mm and an IC chip (µ chip (registered trademark)) having a shape of a 0.5 mm by 0.5 mm rectangle. The tag is mounted on the antenna. The antenna is wound on a resin rod made of a flexible material. In this connection, a slit is disposed in the antenna for impedance matching. Therefore, although the antenna is very small, a predetermined communication distance can be secured. For example, if the radio wave frequency is 2.45 Gigaherz (GHz) to be used for communication, a communication distance of several millimeters is securable.

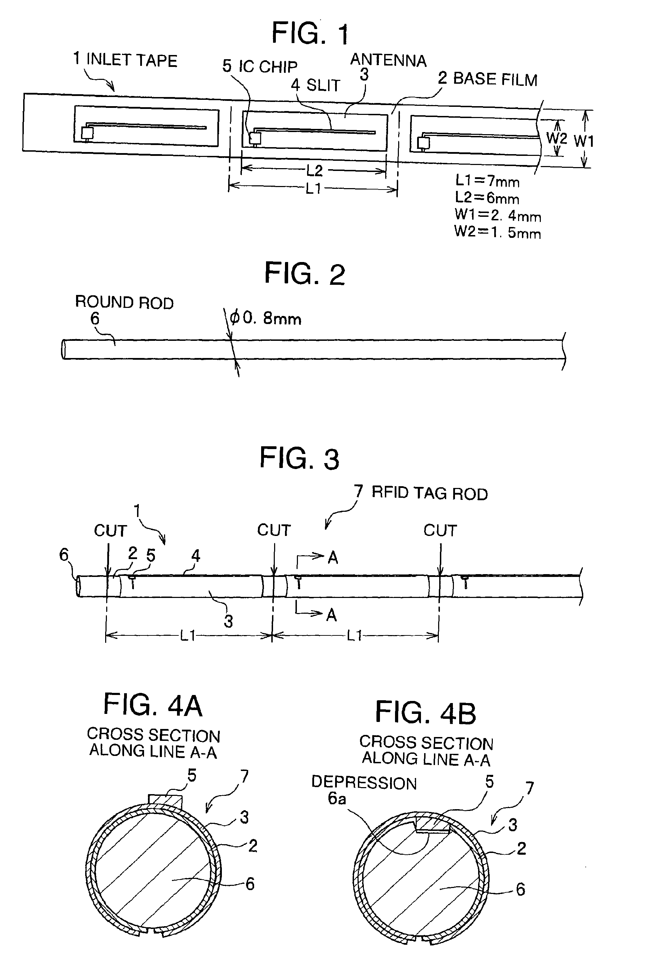

As FIG. 1 shows, an L-shaped slit 4, which is bent with almost a right angle, is disposed in the antenna 3. A first straight-line section of the slit 4 extends along a longitudinal axis of the antenna at a central position with respect to the direction of width of the antenna 3. Moreover, a second straight-line section of the slit 4 extends from an end region of the first straight-line section of the slit 4 up to an outer edge of the antenna 3, forming an opening. By disposing the slit 4 in this way, an impedance matching stub is disposed in the antenna 3.

A first one of two input/output terminals, not shown, of the IC chip 5 is connected to a position in the vicinity of a tip end (near the IC chip 5) of the stub region (a lower-right section of the IC chip 5 of FIG. 1) formed by the slit 4 in the antenna 3. A second one thereof is connected a position opposing that of the first input/output terminal, the first and second input/output terminals sandwiching the slit 4 in the antenna 3. That is, the width of the slit 4 is narrower than the gap between the terminals of the IC chip 5. By connecting the terminals as above, the stub region of the antenna 3 formed by the slit 4 serves as an inductance component connected in series. The inductance component cancels the capacitance component in the IC chip 5, and hence the input/output impedance matching is established between the antenna 3 and the IC chip 5.

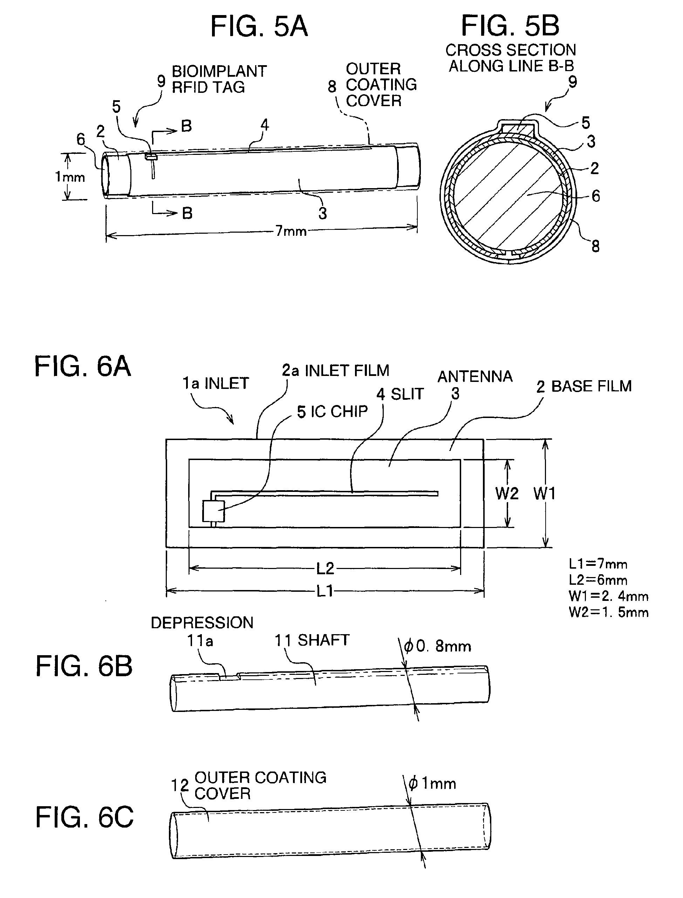

Incidentally, paying attention to the communication distance (radiation efficiency of the antenna 3), it is desirable that the electric length of the antenna 3 is substantially one half of the wavelength of radio waves used for communication. For example, if the communication frequency is 2.45 GHz, the antenna length L2 ranges from about 5 cm to about 6 cm. Also, if the input/output impedance of the IC chip 5 is, for example, 50 ohm (Ω), the length of the slit 4 along the longitudinal direction (i.e., the length of the stub) of the antenna 3 is set to a value ranging from about 5 mm to about 6 mm to establish impedance matching at a feeding point. For an RFID tag 1a (reference is to be made to FIG. 6A) thus configured, a communication distance of several tens of centimeters is attainable by use of a tag reader, not shown, including a reader antenna, not shown, including as an antenna element a conductor having a length ranging from about 5 cm to about 6 cm.

Even when the impedance matching is established as above, if the antenna length L2 is sufficiently less than one half of the wavelength of the radio waves used for the communication, the impedance varies from an expected state. As a result, it is difficult for the reader antenna to carry out communication even if it is tightly attached onto the RFID tag 1a. However, for the antenna 3 of the RFID tag 1a, if a second reader antenna with impedance appropriately varied in advance is employed to be tightly attached onto the very small antenna or to be placed at a position apart from the very small antenna by at most several millimeters, there occurs interaction between the reader antenna and the very small antenna. Resultantly, the impedance matching is established and hence the communication is possible.

Moreover, for the µ chip (registered trademark) of the IC chip, a non-rewritable Read Only Memory (ROM) chip is employed to prevent data loss from the IC chip due to, for example, radiation and high temperature. Additionally, in consideration of implantation of the bioimplant RFID tag in small animals, the bioimplant RFID tag is constructed to be resistive to radiation sterilization and pasteurization. Also, the surface of the bioimplant RFID tag is coated with a film having bio-affinity for animals.

Referring next to the drawings, description will be given in detail of embodiments of a bioimplant RFID tag according to the present invention.

### <First embodiment>

FIG. 1 is a plan view of an inlet tap 1 applied to a first embodiment of a bioimplant RFID tag 9 (reference is to be made to FIGS. 5A and 5B) according to the present invention. Also, FIG. 2 is a perspective view of a round rod 6 employed to paste thereon the inlet tape 1 shown in FIG. 1. Moreover, FIG. 3 is a perspective view showing an RFID tag 7 in a state in which the inlet tape 1 shown in FIG. 1 is pasted on the round rod 6 shown in FIG. 2. Additionally, FIG. 4A is a cross section along line A-A of the RFID tag rod 7 shown in FIG. 3, and FIG. 4B is another cross section along line A-A of the RFID tag rod 7 shown in FIG. 3. In addition, FIGS. 5A and 5B show the first embodiment of the bioimplant RFID tag 9 of the present invention, the tag being cut off after the RFID tag rod 7 shown in FIG. 3 is coated with an outer film. FIG. 5A is a perspective view and FIG. 5B is a cross-sectional view of a cross section along line B-B of FIG. 5A.

As can be seen from FIG. 1, a plurality of antennas 3 formed using a metallic foil of aluminum or the like or formed by evaporation of metal are pasted with a predetermined interval therebetween on a base film 2 of resin in a shape of a narrow tape having a width W1 of 2.4 mm. Each antenna 3 has a length L2 of 6 mm and a width W2 of 1.5 mm and an L-shaped slit 4 for impedance matching. An IC chip 5 having a shape of about 0.5 mm by 0.5 mm rectangle and a thickness of about 0.1 mm is mounted on the surface of the antenna in a curved region of the slit 4. In this regard, since the antenna characteristic is improved by disposing the impedance matching slit 4 in the antenna 3, a predetermined communication distance can be secured even if the antenna is very small.

Incidentally, the IC chip 5 is a radio IC chip of passive type. The antenna 3 receives an electromagnetic wave from a tag reader, not shown, and supplies the potential difference appearing in its longitudinal direction via a feeding point (the connecting point described above) to the IC chip 5. Electromotive force caused by the potential difference operates the IC chip 5.

That is, as shown in FIG. 1, on the inlet tape 1 having the shape of a narrow tape, the antennas 3 each including the IC chip 5 mounted thereon are arranged with an equal interval therebetween, specifically, with a pitch L1 of 7 mm in a longitudinal direction of the base film 2. In this connection, the base film 2 is produced using material of resin, for example, by pasting sheets of PolyVinyl Chloride (PVC) onto each other for easy evaporation by heat of PolyEthylene Terephthalate (PET) and PolyPropylene (PP). As above, for the PET member, there is employed, for example, a product formed by pasting a resin sheet, not shown, adhesive when heated onto the base PET film or there is used a particular PET film which melts to be highly adhesive when heated.

Next, the inlet tape 1 shown in FIG. 1 is wound, in a longitudinal direction, on a thin resin rod 6 made of PET or PP having a diameter Ø of 0.8 mm as shown in FIG. 2. That is, as shown in FIG. 3, the inlet tape of FIG. 1 is arranged in the longitudinal direction of the rod 6 and is wound thereon. In the process, the base film 2 of the inlet tape 1 is wound on the outer circumference of the rod 6, the edge sections on both sides of the base film 2 in the direction of its width not being overlapped with each other. Incidentally, the base film 2 is provisionally fixed onto the rod 6 even if the film is not heated, forming an RFID tag rod 7 as shown in FIG. 3.
Moreover, when the diameter Ø of the rod 6 is 0.6 mm, although the edge sections of the base film 2 overlap with each other if the inlet tape 1 is wound on the rod 6, there exists no fear of overlapping of the edge sections of the antenna 3 on both sides of the antenna 3 in the direction of its width.

The cross section of the RFID tag rod 7 thus formed has a contour which includes, as shown in FIG. 4A, the round rod 6, the base film 2 wound on the outer circumference of the rod 6, the antenna 3 wound on the outer circumference of the base film 2, and the IC chip 5 mounted on the antenna 3. Therefore, the cross section of the RFID tag rod 7 has a contour including a projection having a height equal to the thickness (height) of the IC chip 5, namely, 0.1 mm. In this connection, when a depression 6a is disposed in the rod 6 such that the IC chip 5 arranged on an inner circumference of the antenna 3 is housed in the depression 6a, there does not appear the projection of the IC chip 5.

Next, while winding a thermoplastic film of PET, PP, or elastomer on the outer circumference of the RFID tag rod 7 constructed as shown in FIG. 3, the tag rod 7 is passed into a heating cylinder, not shown. As a result, the base film 2 of the inlet tape 1 is strongly fixed onto the outer circumference of the round rod 6. The outer coating cove 8 (reference is to be made to FIGS. 5A and 5B) is fused by heat, and hence the outer circumference of the RFID tag rod 7 is securely coated with the cover 8.

In the state of the RFID tag rod 7 shown in FIG. 3, the tag rod 7 is not coated with the outer coating cover 8 (FIGS. 5A and 5B). By cutting off the tag rod 7 coated with the cover 8 in an equal length, i.e., with a pitch L1 of 7 mm, there is obtained a bioimplant RFID tag 9 coated with the cover 8 as shown in FIGS. 5A and 5B. That is, as can be seen from FIG. 5B, there is produced a bioimplant RFID tag 9 in which on the outer circumference of the round rod 6 of resin such as PET, the base film 2, the antenna 3 on which the IC chip 5 is mounted, and the outer coating cover 8 are wound in this order. In the configuration, the projection of the IC chip 5 is housed in the outer circumference of the cover 8, namely, there does not exist a fear that the IC chip 5 projects toward the outside. In this connection, it is further favorable to embed the IC chip 5 in the depression 6a of the rod 6 as shown in FIG. 4B.

Due to the configuration described above, the size of the bioimplant RFID tag 9 shown in FIGS. 5A and 5B is quite small, specifically, its diameter is about 1 mm and its length is about 7 mm. Additionally, the cover 8 is in a state in which the cover 8 is coated with lubber or resin having bio-affinity such as polyurethane, nylon, polyethylene, resin of fluorine (such as Teflon (registered trademark)), latex, or hydrophile polymer. Therefore, when such small bioimplant RFID tag 9 is hypodermically implanted in a small animal like a mouse by a hypodermic implantation tool, e.g., a hypodermic needle, the invasion wound is quite small, and hence the wound is quickly cured and the risk of infection or contagion is reduced. Furthermore, due to the small size of the bioimplant RFID tag 9 and the bio-affinity of the material of the cover 8, when the RFID tag 9 is hypodermically implanted in a small animal such as a mouse, the mouse rarely receive stress. Particularly, the skin of the mouse has a thickness ranging from about 0.5 mm to about 1.0 mm. Even in such small animals with a thin skin, the very small bioimplant RFID tag 9 shown in FIGS. 5A and 5B can be hypodermically implanted in an easy way.

That is, when the communication frequency belongs to a long wave band and ranges from about 130 kiloHerz (kHz) to about 200 kHz, its wavelength is quite long, i.e., about 1500 m. In a situation in which signals of such long wavelength are to be received by a conventional bioimplant RFID tag 9 having a length of about 12 mm and a diameter of about 2 mm, it is required to wind a copper cable on a ferrite core about several hundred times to form a coil. Since the configured the RFID tag 9 includes the ferrite core and the copper cable respectively as metallic lumps, the conventional RFID tag 9 exerts stress onto a small animal such as a mouse in consideration of the size and the weight of the RFID tag 9. In contrast thereto, the embodiment of the bioimplant RFID tag 9 is quite small, i.e., has a length of about 7 mm and a diameter of about 1 mm and is coated with material having bio-affinity. Therefore, when the RFID tag 9 is hypodermically implanted in a small animal such as a mouse, it rarely exerts stress onto the animal.

### <Second embodiment>

Description will be given of a second embodiment in which the bioimplant RFID tag is produced by inserting an RFID tag rod into a straw-shaped outer coating cover, not by winding an outer coating tape on the RFID tag rod. Therefore, in the second embodiment, to facilitate insertion of the tag rod into the cover, the long RFID tag rod is not cut off into respective tag rods to produce bioimplant RFID tags. That is, an RFID tag rod is inserted into a straw-shaped outer coating cover which is equal to or more than the RFID tag rod in length, to resultantly produce a bioimplant RFID tag.

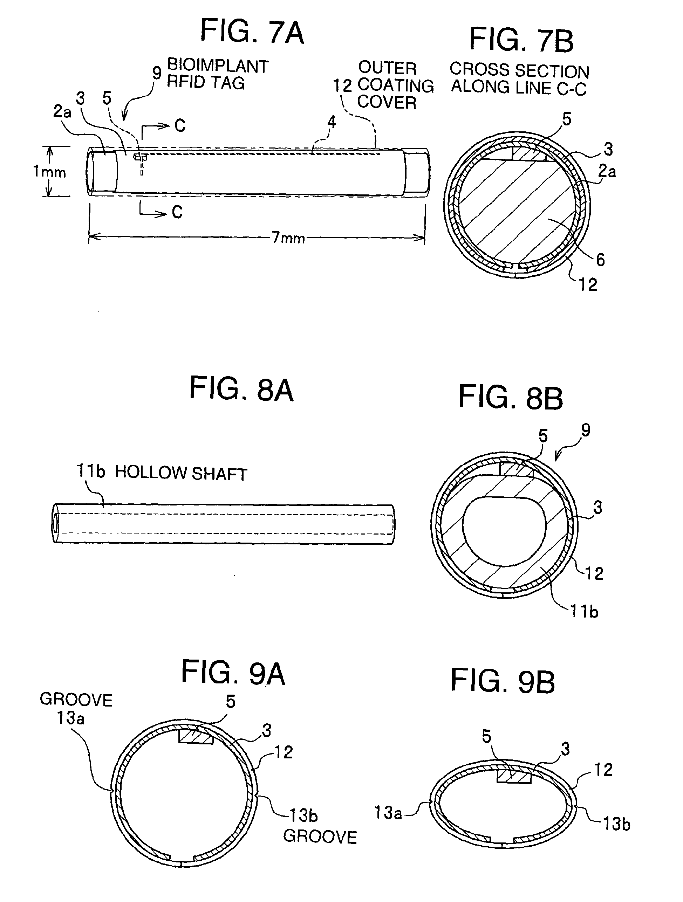

FIGS. 6A to 6C are structural diagrams for explaining a production process of the second embodiment of a bioimplant RFID tag according to the present invention. Also, FIGS. 7A and 7B show the second embodiment of a bioimplant RFID tag in which FIG. 7A is a perspective view and FIG. 7B is a cross-sectional view taken along line C-C of Fig. 7A. First, as shown in FIG. 6A, on a surface of the an inlet film 2a having a length L2 of 7 mm and a width W2 of 2.4 mm, an antenna 3 having a length L2 of 6 mm and a width W2 of 1.5 mm is evaporated to form a slit 4. The slit 4 can be disposed by use of masking at evaporation of the antenna 3 on the surface of the inlet film 2a. Additionally, an IC chip 5 is mounted on the antenna 3, the chip 5 being disposed like a bridge over the slit 4. In this way, each inlet 1a is produced.

On the other hand, a shaft 11 of resin having a diameter Ø2 of 0.8 mm and a length L1 of 7 mm is prepared. Incidentally, a groove 11a capable of housing the IC chip 5 is disposed on the shaft 11 in advance. Thereafter, in a method similar to that of the first embodiment, the inlet 1a of FIG. 6A is wound on the shaft 11 in its longitudinal direction. It is naturally required, before the inlet 1a is wound on the shaft 11, to position the inlet 1a on the shaft 11 so that the IC chip 5 is housed in the depression 11a. In the process, the inlet film 2a is provisionally fixed onto the shaft 11 even if the film 2a is not heated.

The shaft 11 on which the inlet 1a is wound on the shaft 11 is then inserted in the inside of the outer coating cover 12 of resin having a diameter Ø1 of about 1 mm and a length of about 11 mm as shown in FIG. 6C. Thereafter, the cover 12 with the inlet 1a and the shaft 11 thus inserted therein is passed through a heater cylinder, not shown, to be fused to each other by heat. As a result, both ends of the outer coating cover 12 are sealed up, the inlet 1a is fused onto the shaft 11, and the surface of the inlet 1a is uniformly coated with the outer coating cover 12. Naturally, as a material of the cover 12, it is required to employ a thermoplastic resin. In this connection, the ends of the cover 12 may also be sealed up by filling an adhesive. In such situation, the cover 12 may be substantially equal in length to the shaft 11, namely, 7 mm.

Moreover, as shown in FIG. 6B, in a situation wherein the depression 11a is arranged only in a region of the shaft 11 in which the IC chip 5 is placed to thereby preventing projection of the IC chip 5, it is required to appropriately position the IC chip 5 on the depression 11a. For this purpose, if a region of the shaft 11 is removed for the thickness of the IC chip 5 entirely in the longitudinal direction as indicated by dashed lines in FIG. 6B, the positioning of the IC chip 5 on the depression 11a is not required, and only the positioning is required in the radial direction of the shaft 11. It is hence quite easy to conduct the positioning for the IC chip 5 and the shaft 11.

The single bioimplant RFID tag 9 thus created is in the contour and size as shown in FIG. 7A. There is produced quite a small bioimplant RFID tag having a diameter of about 1 mm and a length of about 7 mm. Also, since the IC chip 5 is mounted in the depression 11a of the shaft 11 or the region prepared by removing the shaft 11 entirely in the longitudinal direction, the outer contour of the cross-section of the tag 9 is smoothly rounded in the radial direction of the tag 9. This further facilitates the hypodermic implantation of the RFID tag 9 in a small animal with a thin skin such as a mouse.

### <Third embodiment>

Description will be given of a third embodiment of a bioimplant RFID tag in which an RFID tag rod including a straw-shaped hollow shaft is inserted in an outer coating cover. FIG. 8A is a perspective view of a hollow shaft 11b applied to the third embodiment. FIG. 8B is a cross-sectional view of a bioimplant RFID tag 9 in which an RFID tag rod of the hollow shaft 11b is inserted in an outer coating cover 12. After the inlet 1a shown in FIG. 6A is wound on the hollow shaft 11b of flexible material as shown in FIG. 8A, the shaft 11a with the inlet 1a therein is inserted into the cover 12 shown in FIG. 6C.

Due to the configuration, when the RFID tag rod of the hollow shaft 11b (i.e., the hollow shaft 11b, the IC chip 5, and the antenna 3) is inserted in the inside of the cover 12 and is fused by heat, the hollow shaft 11b inwardly deforms in the region in which the IC chip 5 is mounted as shown in FIG. 8B. There hence does not exist any fear of projection in the outer circumference of the cover 12. In addition, since the similar advantage is obtained regardless of the position of the IC chip 5 in the outer circumstance of the hollow 11b, the positioning of the IC chip 5 and the hollow shaft 11b is not required. In this regard, if the hollow shaft 11b is made of a thermoplastic material used for the outer coating cover 12, when the openings on both ends of the cover 12 are fused to be sealed up by heat, the hollow shaft 11b is also fused to be united thereto. As a result, the edge surfaces of both ends of the cover 12 are more securely sealed up.

Furthermore, in another mode of the third embodiment of the bioimplant RFID tag 9, there exists a method in which without using the shaft or the hollow shaft, the inlet 1a shown in FIG. 6A is rolled into a cylindrical shape and is inserted into an outer coating cover 12 shown in FIG. 6C. That is, as can be seen from FIG. 6A, the inlet 1a with the IC chip 5 on an inner circumference side of the inlet 1a is rolled into a cylinder to be inserted into the inside of the cover 12 shown in FIG. 6C. The cover 12 with the inlet 1a therein is then passed through a heater cylinder to be fused by heat. Resultantly, the region of the IC chip 5 inwardly moves and hence there does not exists the fear of occurrence of the projection in the outer circumference of the cove 12. Also, the positioning of the IC chip 5 is not required in this situation.

Incidentally, if the shaft or the hollow shaft is not employed, when the bioimplant RFID tag 9 deforms inwardly in the radial direction, there exists a fear depending on the deformation that a short circuit is formed on both ends of the antenna 3. In the situation, to avoid such disadvantage, grooves 13a and 13b (reference is to be made to FIGS. 9A and 9B) are disposed in predetermined positions of the cover 12 such that the cover 12 (i.e., the RFID tag 9) deforms in a fixed direction guided by the grooves 13a and 13b.

FIG. 9A is a cross-sectional view of the bioimplant RFID tag 9 applied to still another mode of the third embodiment. FIG. 9B is a cross-sectional view of the bioimplant RFID tag 9 of FIG. 9A in a deformed state. That is, when neither the shaft nor the hollow shaft is employed, the grooves 13a and 13b are disposed in the cover 12 respectively at two predetermined positions (i.e., two positions of the cover 12, so-called, symmetric positions with respect to two end sections of the antenna 3 disposed in the inside of the cover 12). As a result, the RFID tag 9 deforms in a direction, so-called, symmetric on the circle with respect to a line drawn between the regions of the grooves 13a and 13b.

That is, as FIG. 9B shows, the tag 9 deforms symmetrically in the vertical direction with respect to a line drawn between the regions of the grooves 13a and 13b, and hence there exists no fear of a short circuit on both ends of the antenna 3. In other words, by forming the grooves 13a and 13b at the predetermined positions of the cover 12, the RFID tag 9 is guided to deform in a predetermined way, preventing occurrence of a short circuit on both ends of the antenna 3.

### <Fourth embodiment>

Description will be given of a fourth embodiment, specifically, a packaging mode for practical uses of bioimplant RFID tags produced according to the first to fourth embodiments. As above, the bioimplant RFID tag 9 is very small, namely, has a diameter of about 1 mm and a length of about 7 mm; and a hypodermic syringe and the like are required to hypodermically implant the tag 9 in a small animal like a mouse. Therefore, there is required a packaging mode in which the RFID tag 9 and the hypodermic syringe are united with each other. Description will be accordingly given of a configuration of the packaging mode in consideration of the requirement described above.

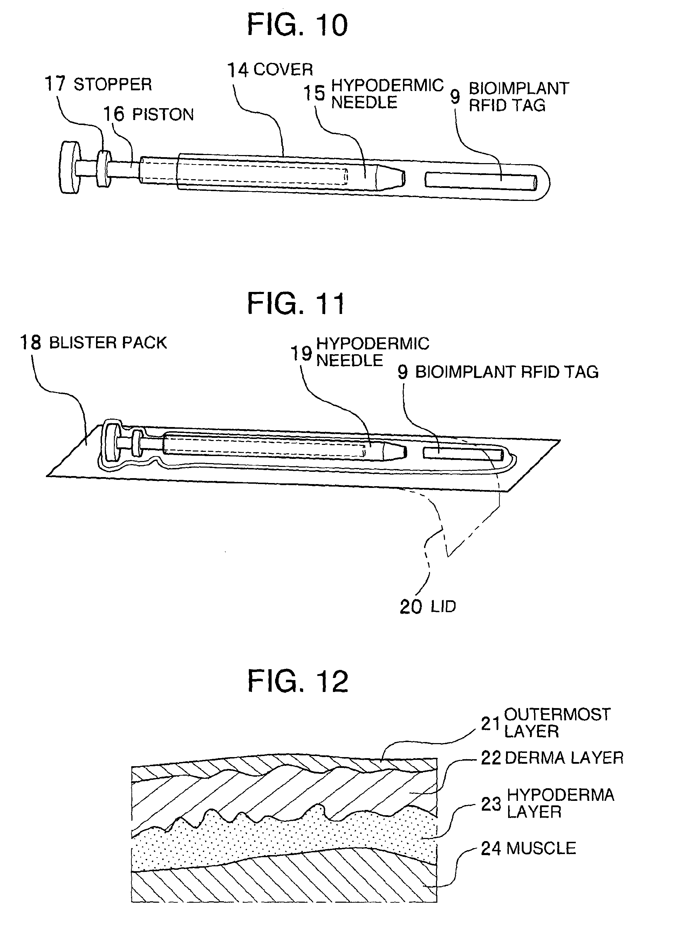

FIG. 10 is a conceptual diagram of packaging of the bioimplant RFID tag 9 and an insertion tool including a hypodermic needle (hypodermic syringe) 19 according to the fourth embodiment of the present invention. In the insertion tool shown in FIG. 10, a bioimplant RFID tag 9 and a hypodermic needle 15 are housed in a cover 14, and a piston 16 and a stopper 17 are partly exposed outside of the cover 14. Basically, the insertion tool includes four parts, i.e., a piston 16, a hypodermic needle 15, a cover 14, and a bioimplant RFID tag 9. On the other hand, in the configuration of the conventional insertion tool using an existing hypodermic syringe put to practices, the insertion tool includes five parts, i.e., a piston, a syringe (body), a needle, a cover, and a bioimplant RFID tag. At least one part can be dispensed with in the insertion tool according to the present invention as compared with the prior art.

Description will be given in more detail of the packaging mode of the insertion tool shown in FIG. 10. The reason why the RFID tag 9 and the hypodermic syringe 15 are separated from each other in the cover 14 is that by insulating the metallic hypodermic needle 15 from the RFID tag 9, the communication test is facilitated at delivery of the product from the factory and at implantation of the tag 9 in a living body. Also, the insertion tool is sterilized after the RFID tag 9 and the hypodermic syringe (i.e., the hypodermic needle 15 and the piston 16) are combined with each other to be housed in the cover 14 as shown in FIG. 10. Therefore, as already described in conjunction with the first embodiment, the insertion tool is configured such that even when the tool is sterilized using radiation and/or at a high temperature, data stored in the RFID tag 9 is not erased. Moreover, to prevent infection, contagion or the like, it is assumed that after the RFID tag 9 is implanted in each small animal, all items including the hypodermic needle 15 are to be discarded. Therefore, it is attempted to possibly reduce the number of constituent components, specifically, even one item of the constituent components as compared with the prior art to thereby lower the price of the product.

Next, description will be given of a method of using the insertion tool shown in FIG. 10. To use the insertion tool shown in FIG. 10, the user pushes the cover 14 toward the side of the hypodermic needle 15 to insert the bioimplant RFID tag 9 in the inside of the hypodermic needle 15 and then removes the cover 14. Thereafter, the user inserts the hypodermic needle 15 in a small animal through its skin and then pushes the piston 16 toward the hypodermic needle 15 until the movement of the piston 16 is stopped by the stopper 17 disposed in the piston 16. As a result, the bioimplant RFID tag 9 is hypodermically implanted in the animal. The user then removes the hypodermic needle 15 from the animal and discards the insertion tool including the hypodermic needle 15.

FIG. 11 is a conceptual diagram of a configuration of blister packaging including the bioimplant RFID tag 9 and the hypodermic needle in another mode of the fourth embodiment according to the present invention. In this connection, a blister 18 is a molded container formed using, for example, PET resin. Also, the blister packaging indicates a packaging mode in which the blister (molded container) 18 and a sheet of ground board or a film are sealed up through fusion by heat or by use of an adhesive.

In FIG. 11, a hypodermic needle 19 and a bioimplant RFID tag 9 are housed in a container of the blister 18 molded in advance, and a film of a plastic (e.g., a PET resin) is attached by fusion or the like to form a lid 20 to thereby seal up the blister packaging. In this connection, the RFID tag 9 is placed on the side of the needle of the hypodermic needle 19 in the blister packaging.

The hypodermic needle 19 and the bioimplant RFID tag 9 united with each other in the blister packaging is put to practices. This allows the existing packaging infrastructure to be used, and hence the price is also lowered in practices.

Also, to use the RFID tag 9, the user peels off the lid 20 from the blister package. In a state in which the hypodermic needle 19 and the RFID tag 9 are housed in the blister 18, the user moves the needle 19 toward the RFID tag 9 to insert the tag 9 in the inside of the needle 19. Therefore, the user is able to install the tag 9 in the needle 19 without touching the tag 9 and the needle 19 by hand. Incidentally, the method to hypodermically implant the RFID tag 9 in a small animal is similar to that described above, and hence description thereof will be avoided.

### <Fifth embodiment>

Description will be given of a fifth embodiment using a method of hypodermically implanting the bioimplant RFID tag 9 in a small animal. FIG. 12 is a diagram generally showing structure of a skin of an animal. The skin structure includes an outermost layer 21, a derma layer 22, and a hypoderma layer 23 arranged in this order, the outermost layer 21 being exposed to the outside. Below the hypoderma layer 23, there exists muscle 24. The skin thickness generally indicates the thickness of the outermost layer 21 and the derma layer 22. For small animals such as a mouse, the skin thickness (the total of the thickness of the outermost layer 21 and that of the derma layer 22) ranges from about 0.5 mm to about 1.0 mm. Therefore, to implant a bioimplant RFID tag in such animal, it is required to use a very small bioimplant RFID tag such as the bioimplant RFID tag 9 having a diameter of about 1 mm and a length of about 7 mm, the tag 9 being implanted in the hypoderma layer 23 of the animal.

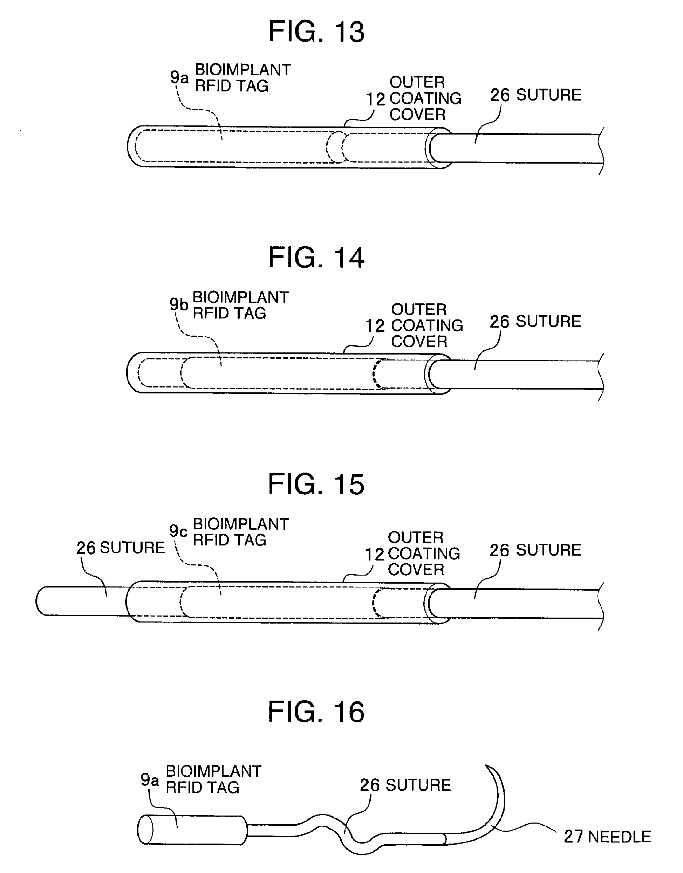

Therefore, the RFID tag 9 is hypodermically implanted in a small animal using a piece of suture with a needle in several methods as below. FIG. 13 is a conceptual diagram showing a first joining method of joining a piece of suture with a bioimplant RFID tag 9 according to the fifth embodiment of the present invention. Description will be given of the methods by referring to FIGS. 6A to 6C and FIGS. 7A and 7B as in the description of the second embodiment.

First, the inlet 1a of FIG. 6A is wound on the shaft 11 of FIG. 6B to construct a bioimplant RFID tag 9a, which will be inserted into an outer coating cover 12. The cover 12 shown in FIG. 6C is prepared with its length slightly increased, and then the RFID tag 9a is inserted into the cover 12. Thereafter, a piece of suture 26 is inserted in the cover 12 from a first end section of the cover 12. This results in the state shown in FIG. 13 in which in the cover 12 with the RFID tag 9a inserted therein, the suture 26 is inserted from the first end section thereof. In this situation, the cover 12 is made of a heat-shrinking material, and the cover 12 with the suture 26 inserted therein is caulked in advance. The outer circumference of the cover 12 is then heated to fuse the cover 12. As a result, the bioimplant RFID tag 9a and the suture 26 are integrally coupled with each other. In this regard, if the suture 26 is made of a thermoplastic material used for the cover 12 and the fusing process is conducted as above, the coating process is more effectively carried out.

In general, the suture with needle has been widely available in the market for medical and dental practices, and hence it is assumed that a needle 27 (reference is to be made to FIG. 16) is beforehand attached onto a second end section of the suture 26 of FIG. 13. In addition, as the needle 27, there is used a needle having a length and a curvature suitable for hypodermic implantation. For example, the needle 27 includes a tip end with a cross section having the shape of a triangle. The general contour of the needle is remarkably curved. To the needle 27, a piece of suture 26 having a length of about 18 mm and a diameter of about 0.43 mm is attached. By using the needle 27 prepared as above, it is possible that the needle 27 is inserted in the skin at an appropriate depth, and the bioimplant RFID tag 9 is appropriately implanted in a direction along the hypodermic region.

In the situation, after the RFID tag 9 is hypodermically implanted in a small animal using the suture 26 with the needle 27, it is possible, by forming a knot in the suture 26, to prevent movement of the tag 9 in the living body. Furthermore, the knot helps the user visually confirm the position of the RFID tag 9 thus implanted in the living body.

FIG. 14 is a conceptual diagram showing a second joining method of joining the suture 26 with the bioimplant RFID tag according to the fifth embodiment of the present invention. The second joining method shown in FIG. 14 employs a bioimplant RFID tag 9b, not using a shaft shown in FIG. 9A. In the second method, the suture 26 passes through the bioimplant RFID tag 9b and is used as a shaft of the tag 9b. Thereafter, the tag 9b with the suture 26 therein as above is inserted in the inside of the outer coating cover 12. The outer circumference of the cover 12 is heated to fuse the cover 12. As a result, the RFID tag 9b and the suture 26 are integrally coupled with each other.

FIG. 15 is a conceptual diagram showing a third joining method of joining the suture 26 with a bioimplant RFID tag 9c according to the fifth embodiment of the present invention. The third joining method shown in FIG. 15 differs from the second joining method shown in FIG. 14 in that the suture 26 having passed through the outer coating cover 12 projects out of a second end of the cover 12. Since the suture 26 passes through the cover 12 to project from the cover 12, there exists no fear, in the implantation of the tag 9c along the hypodermic region of a living body, of mistakenly removing the tag 9c. That is, if the tag 9c is moved (ejected) from under the hypoderma region a second suture wound side, it is only necessary to draw the opposing end section of the suture 26 to return the tag 9c to an appropriate position in the hypodermic region.

FIG. 16 is a conceptual diagram showing a joined state in which the suture 26 with the needle 27 is joined with the bioimplant RFID tag 9a according to the fifth embodiment of the present invention. As FIG. 16 shows, when the suture 26 with the needle 27 is joined with the RFID tag 9a in the method described above, it is possible that the tag 9a is easily implanted in the skin of a small animal like a mouse at an appropriate depth.

### <Sixth embodiment>

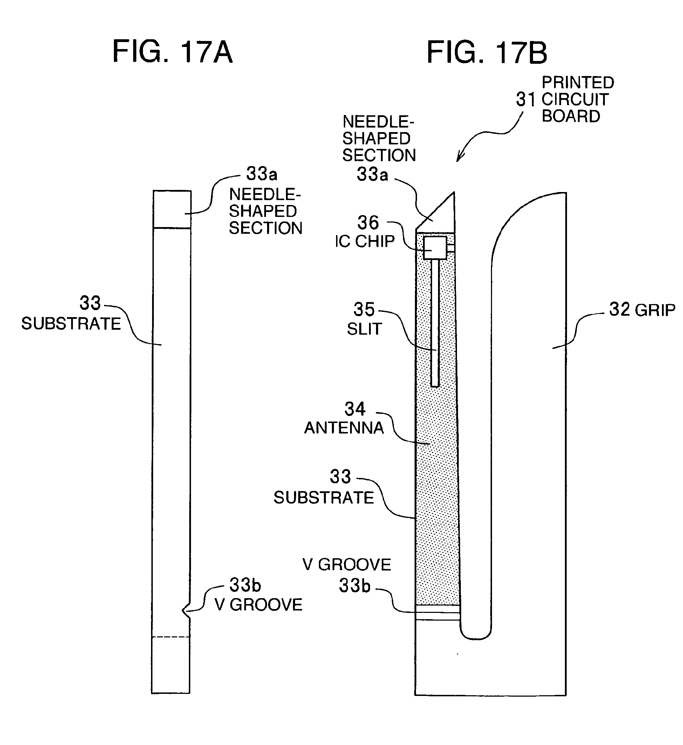

Description will be given of a sixth embodiment in a mode in which a bioimplant RFID tag is formed on a printed circuit board 31 to be hypodermically implanted in a small animal like a mouse. FIGS. 17A and 17B are diagrams of a printed circuit board 31 applied to a bioimplant RFID tag according to the sixth embodiment of the present invention in which FIG. 17A is a side view and FIG. 17B is a plan view.

The printed circuit board 31 includes a grip section 32 and a substrate section 33, the board 31 being in a shape of "U" as shown in FIG. 17B. The grip section 32 is apart from the substrate section 33 by a gap which is about 1 mm, and the substrate section 33 also has a width of about 1 mm. In this connection, the width of the gap between the grip section 32 and the substrate section 33 is not fixed (not constant), but is gradually expanded toward first ends respectively of the grip section 32 and the substrate section 33. Also, the grip section 32 is in a desired contour, and it is only necessary that the grip section is easily grasped by hand. The width of the grip section is not particularly restricted.

Moreover, as can be seen from FIG. 17B, a needle-shaped end 33a in a tip end region of the substrate section 33 is a sharp end, and a V groove 33b is formed in a bottom region of the substrate section 33 as shown in FIG. 17A. Between the needle-shaped end 33a and the V groove 33b, there is formed an antenna 34, for example, by evaporating metal. In addition, in a region of the antenna 34 in the neighborhood of the needle-shaped end 33a, an L-shaped slit 35 is arranged, and an IC chip 36 is mounted like a bridge over a curved section of the slit 35. The antenna 34 is about 7 mm long. The width of the antenna 34 is substantially equal to that of the substrate section 33, i.e., about 1 mm.

Additionally, the surface of the substrate section 33 is coated with resin, not shown, having bio-affinity as in the case described in conjunction with the first embodiment. Also, the IC chip 36 is configured using a ROM chip. That is, the printed circuit board 31 constructed as shown in FIGS. 17A and 17B also serves as a bioimplant RFID tag and an insertion tool to implant the tag in a living body.

Next, description will be given of a method of hypodermically implanting the bioimplant RFID tag in a small animal like a mouse using the printed circuit board 31 shown in FIGS. 17A and 17B. The user holds the grip section 32 of the printed circuit board 31 and hypodermically inserts the needle-shaped section 33a of the substrate section 33 in a small animal. When the portion of the substrate section 33 almost up to the V groove 33b enters the living body of the animal, the user swings the grip section 32 to the right and to the left. As a result, the substrate section 33 is separated at a position in the region of the V groove 33b. That is, the bioimplant RFID tag including the antenna 34 with the slit 35 and the IC chip 36 is hypodermically implanted in the living body.

As above, since a width of the gap between the grip section 32 and the substrate section 33 is not constant and gradually extends towards the needle-shaped section 33a, when the needle-shaped section 33a of the substrate section 33 is hypodermically inserted in the living body, the inside edge of the grip section 32 serves as a guide of the insertion. Specifically, while the needle-shaped section 33a is being inserted into the living body, it advances along an appropriate depth in the skin to thereby implant the substrate section 33 (i.e., the bioimplant RFID tag) in the hypodermic region. The printed circuit board 31 of this type is inexpensive and is hence available as the general bioimplant RFID tag.

The bioimplant RFID tag according to the present invention is very small and hence can be effectively used, for example, for the management of experiments of small animals such as mice in, for example, a biotechnological research institute and a pathological research institute.

It should be further understood by those skilled in the art that although the foregoing description has been made on embodiments of the invention, the invention is not limited thereto and various changes and modification may be made without departing from the spirit of the invention and the scope of the appended claims.

## Claims

1. A bioimplant Radio Frequency IDentification (RFID) tag (9) to be implanted in a living body of an animal to conduct information management for the animal through wireless communication, comprising:
an inlet (1) comprising a film of resin of flexible material, an antenna (3) in which an impedance matching slit (4) is formed, and an Integrated Circuit (IC) chip (5), the antenna and the IC chip being disposed on the film;
a rod member (6) made of resin of flexible material for pasting the inlet on an outer circumference thereof; and
an outer coating cover (8) made of resin of material having bio-affinity for coating therewith the inlet pasted on the outer circumference of the rod member.

2. The bioimplant RFID tag according to claim 1, wherein the animal is a small animal of which a body length of a body thereof is about 10 cm or less, the tag having a length equal to or less than 10% of the body length and a diameter or a width equal to or less than 1.5% of the body length.

3. The bioimplant RFID tag according to claim 1, wherein the length of the tag is equal to or less than 7 millimeters (mm) and the diameter of the width is equal to or less than 1 mm.

4. The bioimplant RFID tag according to claim 1, wherein a depression (6a) is disposed in the rod member, the depression preventing projection of the IC chip.

5. The bioimplant RFID tag according to claim 1, wherein a region of the rod member is removed substantially entirely along a longitudinal direction thereof with a thickness of the IC chip (FIG. 6B), the depression preventing projection of the IC chip.

6. The bioimplant RFID tag according to claim 1, wherein the rod member is hollow in a central region thereof (11b).

7. The bioimplant RFID tag according to claim 1, wherein the inlet, the rod member, and the outer coating cover are fused by heat onto each other.

8. A bioimplant RFID tag (9), comprising:
an inlet 1 comprising a film of resin of flexible material, an antenna (3) in which an impedance matching slit (4) is formed, and an IC chip (5), the antenna and the IC chip being disposed on the film, the inlet being formed in a shape of a cylinder; and
an outer coating cover (8) made of resin of material having bio-affinity for coating the inlet therewith.

9. The bioimplant RFID tag according to claim 8, wherein the inlet and the outer coating cover are fused by heat onto each other.

10. The bioimplant RFID tag according to claim 9, wherein a groove having a predetermined depth is disposed in at least one position on an outer circumference of the outer coating cover, the groove guiding the inlet to deform in a deformed state not causing a short circuit in both ends of the antenna (FIG. 9B) .

11. The bioimplant RFID tag (9) to be implanted in a living body of an animal to conduct information management for the animal through wireless communication, comprising a U-shaped printed circuit board (31; FIGS. 17A and 17B), wherein the circuit board comprises:
a substrate section (33) comprising an antenna (34) in which an impedance matching slit (35) is formed, an IC chip (36), and a needle-shaped section formed to include a sharp end in a tip end region of the substrate section, the antenna and the IC chip being mounted on the substrate section; and
a grip section (32) for holding the substrate section.

12. The bioimplant RFID tag according to claim 11, wherein a groove (33b) is formed in a bottom region of the substrate section, to easily cut off the substrate section.

13. The bioimplant RFID tag according to claim 11 or 12, wherein an inner edge of the grip section and an inner edge of the substrate section restrict an implantation depth with which the substrate section is implanted in the living body of the animal (FIG. 17B).

14. The bioimplant RFID tag according to claim 13, wherein the inner edge of the substrate section is slightly more apart from the inner edge of the grid section in a direction to the needle-shaped section (FIG. 17B).

15. The bioimplant RFID tag according to claim 11, wherein:
the antenna is formed between an end position of the needle-shaped section and the groove; and
the antenna has a length equal to or less than about 7 mm and a width equal to or less than about 1 mm.

16. The bioimplant RFID tag according to claim 15, wherein the IC chip comprises a chip of read-only memory (ROM) type in which data cannot be rewritten.

17. An insertion tool for implanting a bioimplant RFID tag (9) for conducting information management for an animal through wireless communication in a living body of the animal (FIG. 10), comprising:
a hypodermic needle (15) in which a cylindrical hole is disposed to house the RFID tag therein; and
a piston (16) for ejecting the RFID tag inserted in the cylindrical hole from a tip end of the hypodermic needle.

18. The insertion tool according to claim 17, further comprising a cover (14) for housing therein at least the RFID tag and the tip end of the hypodermic needle.

19. The insertion tool according to claim 17, further comprising a blister packaging container (18) for housing therein the RFID tag, the hypodermic needle and the piston.
